(19) Europäisches Patentamt

European Patent Office

Office européen des brevets

(11) Veröffentlichungsnummer: **0 261 420**
**A1**

(12) **EUROPÄISCHE PATENTANMELDUNG**

(21) Anmeldenummer: 87112290.9

(22) Anmeldetag: 25.08.87

(51) Int. Cl.⁴: **A22C 21/00 , A22C 17/02**

(30) Priorität: 23.09.86 DE 3632187

(43) Veröffentlichungstag der Anmeldung:
**30.03.88 Patentblatt 88/13**

(84) Benannte Vertragsstaaten:
**DE ES FR GB IT NL**

(71) Anmelder: **NORDISCHER MASCHINENBAU RUD. BAADER GMBH + CO KG
Geniner Strasse 249
D-2400 Lübeck(DE)**

(72) Erfinder: **Lindert, Heinrich
Kölckebecker Strasse 62
D-4802 Halle(DE)**

(54) **Einrichtung zum Bearbeiten von Geflügelkörpern.**

(57) Die Erfindung betrifft eine Einrichtung zum Bearbeiten von Geflügelkörpern und umfaßt eine umlaufend angetriebene Förderkette (22) mit Haltevorrichtungen, die jeweils aus einem feststehenden (12) und einem beweglichen Greifarm (13) bestehen, der im Verlaufe der Fortschrittsbewegung der Förderkette durch gestellfeste Kurvenschienen (34) gesteuert wird, um die Geflügelkörper (14) über einen Teilbereich des Förderweges festzuhalten, so daß manuelle wie maschinelle Bearbeitungsvorgänge an diesen ausgeführt werden können.

Fig.1

EP 0 261 420 A1

## Einrichtung zum Bearbeiten von Geflügelkörpern

Die Erfindung betrifft eine Bearbeitungsanlage für Geflügelkörper, Fleischstücke od. dgl. mit einer umlaufende Haltevorrichtung tragenden Förderkette.

Mit der Erfindung soll eine Anlage geschaffen werden, auf welcher Fleischstücke schnell, sicher und vollständig vom Skelett getrennt werden können. Die Anlage soll sich zum automatischen Bearbeiten eignen, so daß ein zeitraubendes und damit lohnintensives manuelles Bearbeiten vermieden wird. Sie soll es aber auch ermöglichen, die manuelle Bearbeitung durch sicheres Befestigen des Fleisches und Halten in seiner Lage zu verbessern.

Diese Aufgabe wird erfindungsgemäß dadurch gelöst, daß jede Haltevorrichtung Greifarme für die Befestigung des Geflügelkörpers aufweist. Dadurch kann ein durch die Greifarme für die Bearbeitung festgelegter Geflügelkörper automatisch von weiteren Anlageteilen so bearbeitet werden, daß die Fleischstücke von dem Knochengerüst getrennt werden. Sofern eine Abtrennung des Fleisches manuell erfolgt, ergeben sich sauberere, vollständig vom Fleisch getrennte Oberflächen des Knochengerüstes. In diesem Fall ist es auch möglich, als Doppel-oder Butterflyfilets bezeichnete Fleischstücke abzuschneiden.

Bevorzugt ist jede Haltevorrichtung als Fahrgestell mit einem festen Greifarm und einem mit diesem zusammenwirkenden, um eine am Fahrgestell angeordnete Schwenkachse verschwenkbaren Greifarm ausgebildet. Der verschwenkbare Greifarm kann so zum festen Greifarm hin geschwenkt werden, so daß ein vorher auf den festen Greifarm aufgespießter Hähnchenkörper mit Hilfe des verschwenkbaren Greifarms festgeklemmt wird. Das Fleischgut läßt sich nun mit Schälmessern vom Knochen trennen. Beispielsweise kann die Geflügelbrust mit und ohne Haut in der Anlage abgeschnitten werden.

Durch Verwendung der Förderkette ergibt sich eine Bandförderstrecke, an deren Ende Hähnchenbrustfilets seitlich weg auf Transportbänder fallen. Die Knochenreste fallen in einen besonderen Behälter bzw. auf ein besonderes Transportband.

Bevorzugte Ausführungsformen der Erfindung sind in den Schutzansprüchen enthalten. Der Schutzumfang erstreckt sich nicht nur auf die beanspruchten Einzelmerkmale, sondern auch auf deren Kombination.

Ein Ausführungsbeispiel der Erfindung ist in der Zeichnung dargestellt und wird im folgenden näher beschrieben. Es zeigen

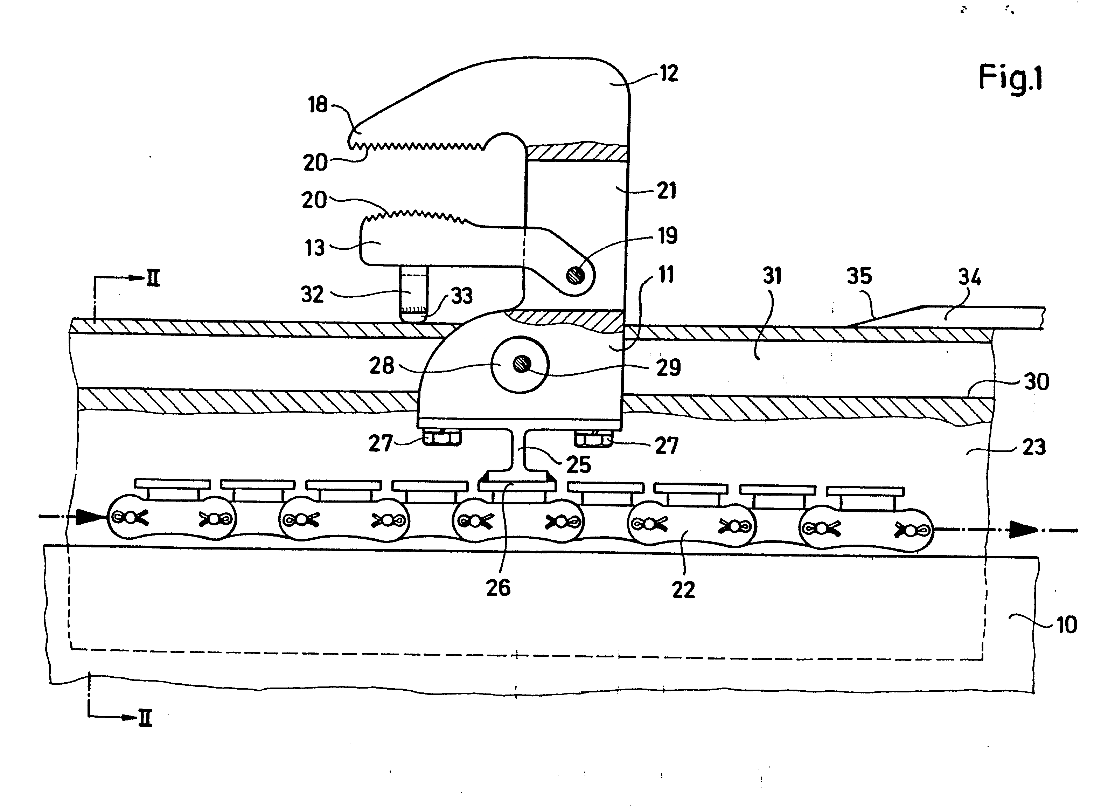

Fig. 1 einen Ausschnitt der Bearbeitungsanlage in einem senkrechten, in Förderrichtung der Förderkette verlaufenden Schnitt mit einer Seitenansicht der Förderkette und des Fahrgestells einer Haltevorrichtung;

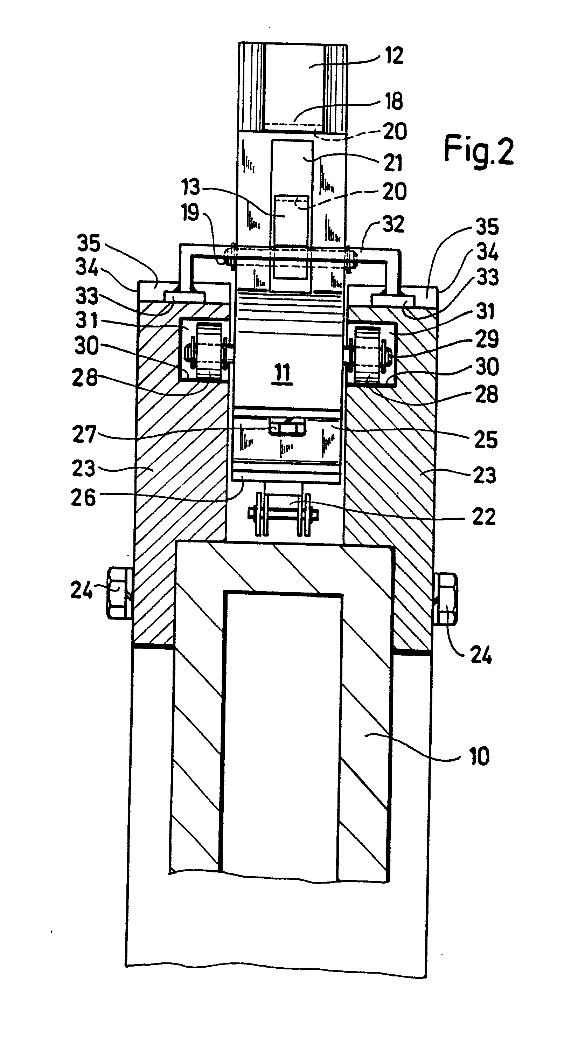

Fig. 2 einen senkrechten Querschnitt durch die Anlage gemäß der Linie II - II der Fig. 1;

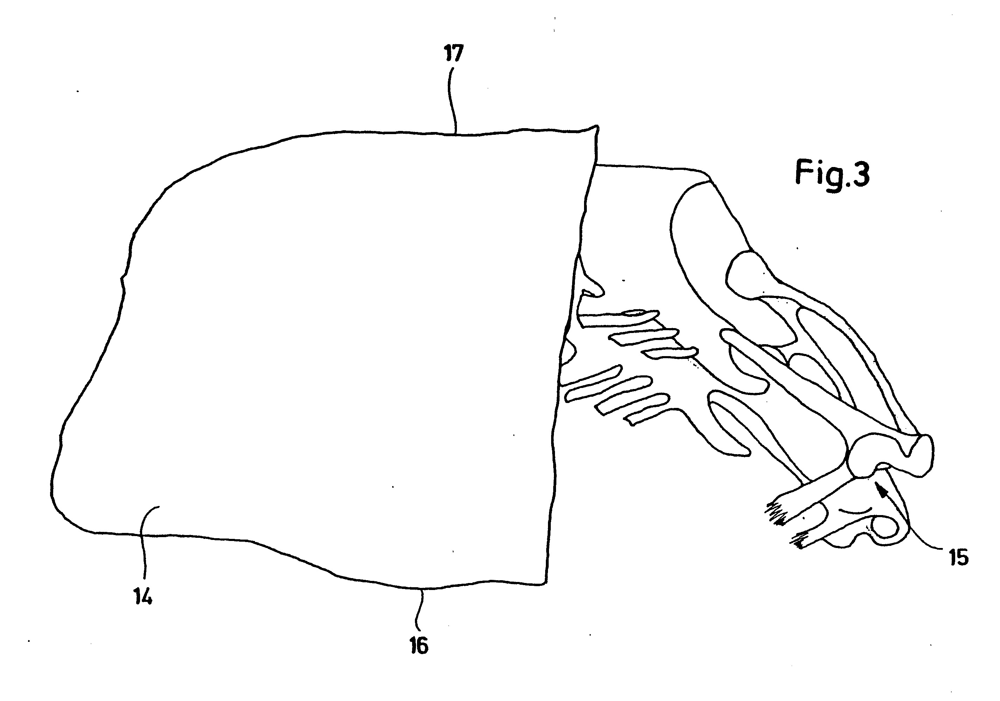

Fig. 3 eine Seitenansicht eines für die Bearbeitung auf der Anlage vorgesehenen, auf dem Rücken liegenden Geflügelkörpers, wobei im Schulterbereich nur das Skelett dargestellt ist.

Eine erfindungsgemäße Bearbeitungsanlage weist eine Vielzahl von längs eines festen Maschinengestells 10 bewegbaren Haltevorrichtungen auf welche je mit einem festen Greifarm 12 und einem verschwenkbaren Greifarm 13 zur Aufnahme eines Geflügelkörpers 14 ausgestattet sind. Dieser ist für die Bearbeitung so vorbereitet, daß sich in seinem Schulterbereich ein Hohlraum 15 befindet, mit welchem voran der Geflügelkörper 14 mit unten befindlicher Rückenseite 16 und oben befindlicher Brustseite 17 auf dem Greifarm 12 in Fahrtrichtung der Haltevorrichtung aufgespießt werden kann. Der feste Greifarm 12 endet zu diesem Zweck in einer Aufsteckspitze 18 . Die Befestigung des Geflügelkörpers 14 erfolgt durch Hochschwenken des verschwenkbaren Greifarms 13 , der um eine an dem festen Greifarm 12 befestigte Schwenkachse 19 hochschwenkbar gelagert ist.

Die einander zugewandten Oberflächen des festen Greifarms 12 und des verschwenkbaren Greifarms 13 sind mit einer Riffelung 20 versehen, welche beim Befestigen des Geflügelkörpers 14 jeweils in die haut bzw. das Fleisch geringfügig eindringt und so das Abgleiten des Geflügelkörpers von dort verhindert. Der verschwenk bare Greifarm 13 ist mit seinem Lagerende in einer zentralen Ausnehmung 21 angeordnet, durch welche die Schwenkachse 19 hindurch verläuft.

Jede Haltevorrichtung weist ein Fahrgestell 11 auf, welches in dem Maschinengestell 10 in folgender Weise geführt wird. Oberhalb des Maschinengestells 10 ist eine Förderkette 22 in Pfeilrichtung bewegbar geführt. Sie wird von zwei parallelen Seitenwänden 23 umgeben, die an dem Maschinengestell 10 mit Hilfe von Schrauben 24 befestigt sind. In dem Zwischenraum zwischen den Seitenwänden 23 sind die Fahrgestelle 11 angeordnet. Jedes Fahrgestell ist an seiner Unterseite über einen Verbindungsträger 25 mit einem Glied der Förderkette 22 verbunden, wobei der Verbindungsträger 25 auf dem entsprechenden Tragschuh 26 des Kettengliedes befestigt ist. Im Ausführungsbeispiel ist diese Befestigung eine Schweißverbindung. Die Befestigung zwischen dem Verbindungsträger 25 und dem Fahrgestell 11 ist mit Hilfe von Schrauben 27 lösbar durchgeführt, so daß das Fahrgestell 11 ausgebaut werden kann. Die Förderkette 22 zieht somit das Fahrgestell 11 in Pfeilrichtung.

Die Abstützung des Fahrgestells 11 erfolgt mit Hilfe von seitlich abstehenden Rollen 28 . Im Ausführungsbeispiel sind zwei Rollen 28 vorgesehen, die eine gemeinsame Drehachse 29 haben. Diese läuft durch das Fahrgestell 11 hindurch. Diese Rolle 28 stützt sich auf einer Rollbahn 30 ab, die sich in einer Führungsausnehmung 31 der zugehörigen Seitenwand 23 befindet.

An der Unterseite des verschwenkbaren Greifarms 13 ist ein U-förmiger Stützbügel 32 befestigt, der sich mit seinen Schenkeln über Gleitschuhe 33 an den waagerechten Oberflächen der beiden Seitenwände 23 abstützt. Mit Hilfe einer Kurvenschiene 34, die in einer Auflaufschräge 35 beginnt bzw. endet und jeweils auf der waagerechten Oberfläche einer Seitenwand 23 angeordnet ist, läßt sich nun der verschwenkbare Greifarm 13 dann hochschwenken, wenn die Gleitschuhe 33 des Stützbügels 32 auf die Auflaufschräge beider parallelen Kurvenschienen 34 gelangen . Die Öffnungsstellung der Greifarme 12 13 hängt also von der Fahrt des Fahrgestells 11 längs des Maschinengestells 10 ab. Wenn die Gleitschuhe 33 die Auflaufschräge 35 verlassen haben und auf den waagerechten Oberflächenbereich der Kurvenschienen 34 gelangt sind, ist der teilweise Schließvorgang der Greifarme 12 und 13 beendet, der auf den festen Greifarm 12 aufgespießte Geflügelkörper 14 ist festgelegt und kann nun während der Bewegung längs der Kurvenschienen 34 bearbeitet werden. Nach der Bearbeitung kann durch eine am Ende jeder Kurvenschiene 34 befindliche Ablaufschräge wieder eine größere Öffnungsstellung der Greifarme 12 und 13 durch Abschwenken des verschwenkbaren Greifarms 13 eingestellt werden, so daß das Skelett des Geflügelkörpers 14 nun von dem festen Greifarm 12 abgestreift werden kann.

## Ansprüche

1. Bearbeitungsanlage für Geflügelkörper, Fleischstücke od. dgl. mit einer umlaufende Haltevorrichtungen tragenden Förderkette, **dadurch gekennzeichnet,** daß jede Haltevorrichtung Greifarme (12, 13) für die Befestigung des Geflügelkörpers (14) aufweist.

2. Anlage nach Anspruch 1 , **dadurch gekennzeichnet,,** daß jede Haltevorrichtung als Fahrgestell (11) mit einem festem Greifarm (12) und einem mit diesem zusammenwirkenden, um eine am Fahrgestell (11) angeordnete Schwenkachse (19) verschwenkbaren Greifarm (13) ausgebildet ist.

3. Anlage nach den Ansprüchen 1 oder 2, **dadurch gekennzeichnet,** daß die Greifarme (12, 13) jeweils eine mit einer Riffelung (20) versehene Anlagefläche aufweisen.

4. Anlage nach einem der Ansprüche 1 bis 3, **dadurch gekennzeichnet,** daß der feste Greifarm (12) in einer Aufsteckspitze (18) endet.

5. Anlage nach einen der Ansprüche 1 bis 4, **dadurch gekennnzeichnet,** daß der schwenkbare Greifarm (13) innerhalb einer zentralen Ausnehmung (21) des festen Greifarms (12) in senkrechter Ebene beweglich ausgebildet ist.

6. Anlage nach einem der Ansprüche 1 bis 5, **dadurch gekennzeichnet,** daß wenigstens eine gestellfeste Kurvenschiene (34) vorgesehen ist, mit welcher der verschwenkbare Greifarm (13) zumindest über eine Teilstrecke der Fortschrittsbewegung der Haltevorrichtungen in Wirkverbindung tritt, um diesen gegen den festen Greifarm (12) zu verschwenken.

Fig.1

0 261 420

0 261 420

Fig.2

Fig.3

0 261 420

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 570 050 (DRAPER) <br> * Spalte 4, Zeilen 16-46 * | 1,6 | A 22 C 21/00 <br> A 22 C 17/02 |
| A | | 2 | |
| A | FR-A-2 428 979 (KORHONEN) <br> * Seite 5, Zeile 2 - Seite 6, Zeile 25 * | 3,4 | |
| A | US-A-4 385 419 (CANTRELL) | | |

RECHERCHIERTE SACHGEBIETE (Int. Cl.4)

A 22 C

Der vorliegende Recherchenbericht wurde für alle Patentansprüche erstellt

| Recherchenort | Abschlußdatum der Recherche | Prüfer |
|---|---|---|
| DEN HAAG | 02-12-1987 | DE LAMEILLIEURE D. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
    ........................................................................
& : Mitglied der gleichen Patentfamilie, übereinstimmendes
    Dokument

EPO FORM 1503 03.82 (P0403)